# DEMANDE DE BREVET EUROPEEN

(11) **EP 1 092 583 A1**
(43) Date de publication de la demande: **18.04.2001**
(21) Numéro de dépôt: 00402757.9
(22) Date de dépôt: 06.10.2000
(51) Int. Cl.: B60K 41/04, B60K 6/04, H02K 51/00

(54) **Groupe motopropulseur d'un véhicule hybride à coupleur électromagnétique**

(30) Priorité: 11.10.1999 FR 9912637
(71) Demandeur: Renault, 92100 Boulogne Billancourt (FR)
(72) Inventeur: Caillard, Benoît, 92260 Fontenay aux Roses (FR); Chauvelier, Eric, 78320 Le Mesnil Saint Denis (FR)

(57) **Abrégé**

L'invention concerne un groupe motopropulseur pour véhicule à transmission électrique hybride, comprenant un moteur thermique, un superviseur, deux moteurs électriques formant un coupleur électromagnétique, le rotor (R₁) du premier moteur électrique étant lié à l'arbre de rotation (3) du moteur thermique (1) pendant que son stator (S₁) est libre en rotation, le rotor (R₁) et le stator tournant (S₁) de ce premier moteur électrique ayant le même axe de symétrie parallèle ou confondu avec l'arbre (3) et porte le rotor (R₂) du deuxième moteur électrique dont le stator (S₂) concentrique est fixe par rapport au véhicule et solidaire du carter moteur, afin que le couple du rotor (R₁) du premier moteur électrique soit transmis magnétiquement à son stator tournant (S₁) et le couple du stator fixe (S₂) du deuxième moteur électrique soit transmis au stator tournant (S₁).Une prise directe est réalisée pour bloquer en rotation le stator tournant du premier moteur électrique par rapport à son rotor duquel il devient solidaire.

## Description

L'invention concerne un groupe motopropulseur d'un véhicule hybride à transmission électrique, de type série/parallèle, comprenant un moteur thermique et un coupleur électromagnétique. Elle concerne également un procédé de commande d'un tel groupe motopropulseur.

Un véhicule automobile de type hybride série/parallèle comprend au moins deux sources d'énergie, soit le carburant primaire qui alimente le moteur thermique et l'électricité qui alimente les moteurs électriques, et il est constitué de deux machines ou moteurs électriques et d'un moteur thermique associés à un dispositif de transmission mécanique de la puissance permettant la fonction série, ainsi que la fonction parallèle. En fonctionnement série, la puissance aux roues est fournie seulement par le moteur électrique, le moteur thermique entraînant une génératrice qui alimente le moteur électrique, en complément le plus souvent d'une batterie. En fonctionnement parallèle, les puissances mécaniques fournies par les moteurs thermique et électriques sont sommées au niveau des roues.

L'invention s'applique aux véhicules hybrides de type simple et double différentiel, c'est-à-dire pour lesquels la transmission mécanique de puissance est réalisée respectivement par un simple train épicycloïdal et par un double train épicycloïdal réalisé par deux trains reliés par une ou plusieurs liaisons.

Dans la plupart des véhicules électriques hybrides, une partie de l'énergie mécanique fournie par le moteur thermique est transformée en énergie électrique qui va être retransformée en énergie mécanique. Ceci, afin de garder deux degrés de liberté pour le contrôle du moteur électrique, soit son couple et son régime, qui sont choisis dans le but de minimiser la consommation de carburant et les émissions de polluants.

De plus, de nombreuses architectures comportent deux machines électriques physiquement séparées, entraînant un encombrement important ainsi qu'un coût non négligeable.

La transmission décrite dans la demande de brevet 98 373827 au nom de TOYOTA JIDOSHA, est à rapport infiniment variable. En effet, la vitesse du moteur thermique peut être totalement découplée de celle des roues, alors qu'une partie de la puissance passe mécaniquement par le coupleur jusqu'aux roues, l'autre partie étant transformée en courant électrique pour recharger les batteries ou utilisée dans le moteur électrique en augmentant le couple à la roue. L'inconvénient réside dans le dimensionnement important des machines électriques et de leurs circuits électroniques associés, pour que leurs performances soient acceptables en modes de fonctionnement tout électrique et hybride. De plus, à vitesse stabilisée ou quasi-stabilisée sur route ou autoroute, le coupleur a une vitesse de rotation nulle mais un couple maximal, se traduisant par un courant maximal dans son enroulement et par conséquent par une perte électrique non négligeable.
Les problèmes non résolus par les transmissions actuelles sont la taille des machines électriques nécessaires pour réaliser un coupleur performant et la minimisation des pertes électriques à vide ou à vitesse nulle.

Le but de l'invention est de pallier ces inconvénients en réalisant un coupleur électromagnétique regroupant deux machines électriques et qui permet de réduire notablement l'encombrement de l'ensemble, tout en minimisant les flux d'énergie électrique.

Pour cela, un premier objet de l'invention est un groupe motopropulseur pour véhicule à transmission électrique hybride, comprenant un moteur thermique, deux moteurs électriques, des moyens de changement de la vitesse du moteur thermique sans changer la vitesse de déplacement du véhicule et un calculateur électronique de commande, de type superviseur, des moteurs thermique et électriques en fonction de l'enfoncement de la pédale d'accélérateur par le conducteur, caractérisé en ce que les deux moteurs électriques forment un coupleur électromagnétique constitué de telle manière que le rotor du premier moteur électrique est lié à l'arbre de rotation du moteur thermique pendant que son stator est libre en rotation, le rotor R₁ et le stator tournant S₁ de ce premier moteur électrique ayant le même axe de symétrie parallèle ou confondu avec l'arbre du moteur thermique, et porte le rotor R₂ du deuxième moteur électrique dont le stator S₂ concentrique est fixe par rapport au véhicule et solidaire du carter moteur, de telle sorte que le couple du rotor R₁ du premier moteur électrique est transmis magnétiquement à son stator tournant S₁ et le couple du stator fixe S₂ du deuxième moteur électrique est transmis au stator tournant S₁, et en ce qu'une prise directe est réalisée pour bloquer en rotation le stator tournant du premier moteur électrique par rapport à son rotor duquel il devient solidaire dans le but de transmettre un couple mécanique à la roue sans perte électrique.

Un second objet de l'invention est un procédé de commande du coupleur électromagnétique par asservissement du couple du rotor ou du couple du stator fixe.

D'autres caractéristiques et avantages de l'invention apparaîtront à la lecture de la description de plusieurs exemples de réalisation d'un groupe motopropulseur, illustrée par les figures suivantes qui sont :
- la figure 1 : une vue schématique en coupe partielle d'un groupe motopropulseur de véhicule hybride avec une boîte de vitesses, selon l'invention ;
- les figures 2 et 3 : une vue schématique en coupe partielle d'un groupe motopropulseur de véhicule hybride différentiel épicycloïdal, avec un train respectivement en aval et en amont du coupleur, selon l'invention ;
- la figure 4 : une vue schématique en coupe partielle d'un groupe motopropulseur de véhicule hybride différentiel, avec un train épicycloïdal et deux embrayages sur l'arbre du moteur thermique, selon l'invention ;
- la figure 5 : une vue schématique en coupe partielle d'un groupe motopropulseur de véhicule hybride différentiel, avec deux trains épicycloïdaux en amont du coupleur et des embrayages sur l'arbre du moteur thermique, selon l'invention ;
- la figure 6 : une vue schématique en coupe partielle d'un groupe motopropulseur de véhicule hybride différentiel, avec deux trains épicycloïdaux de part et d'autre du couple et deux embrayages sur l'arbre du moteur thermique, selon l'invention.

Les éléments portant les mêmes références sur les différentes figures remplissent les mêmes fonctions en vue des mêmes résultats.

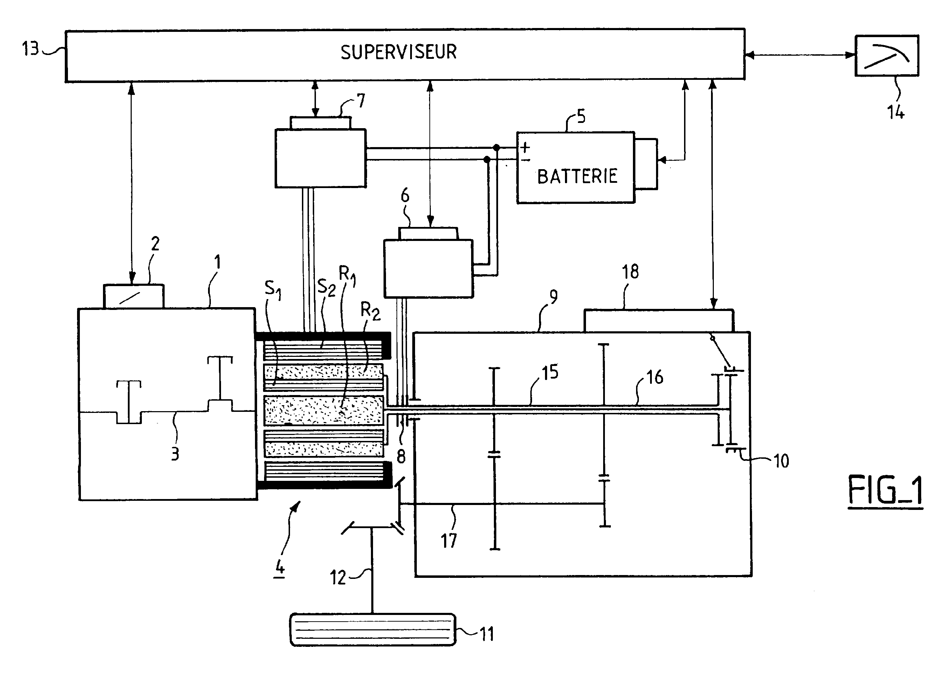

Selon la vue schématique de la figure 1, le groupe motopropulseur d'un véhicule hybride selon l'invention comporte un moteur thermique 1 piloté par l'intermédiaire d'un organe de commande 2 et alimenté en carburant. Par l'arbre 3 de vilebrequin, il est relié à un coupleur électromagnétique 4, caractéristique de l'invention et constitué de deux machines ou moteurs électriques. Un premier moteur électrique comprend un rotor R₁ lié à l'arbre 3 du moteur thermique 1 et un stator S₁ libre en rotation, les deux ayant un axe de symétrie parallèle ou confondu avec l'arbre 3. Le couple résistif du rotor R₁ est transmis magnétiquement au stator tournant S₁. Le deuxième moteur électrique comprend un rotor R₂ qui est porté par le stator S₁ du premier moteur, dont le bobinage porte donc un aimant permanent, et un stator S₂ concentrique qui est fixe, solidaire du carter du moteur thermique. Chacun de ces deux moteurs électriques est alimenté par une batterie 5, qu'il peut également recharger, par l'intermédiaire chacun d'un circuit de commande associé à un circuit électronique de puissance 6 et 7 de leur stator respectif S₁ et S₂. Des bagues 8 sont prévues pour permettre une liaison électrique entre le circuit de puissance 6 et le stator tournant S₁ du premier moteur.

Sur l'exemple de cette figure 1, le groupe motopropulseur comprend une boîte de vitesses 9 à au moins deux rapports. L'arbre primaire 15 de la boîte est lié au stator tournant S₁ du premier moteur électrique, alors que l'autre arbre 16, est lié à son rotor R₁, l'arbre secondaire 17 étant lui lié aux roues 11. Au bout des arbres de la boîte est réalisée une prise directe au moyen d'un crabot 10 ou un embrayage permettant de bloquer en rotation le stator tournant Si du premier moteur électrique par rapport à son rotor R₁, dans le but de transmettre un couple mécanique à la roue 11 sans perte électrique, par l'intermédiaire d'un réducteur 12.

Un calculateur électronique de commande 13, de type superviseur, reçoit des informations des différents organes du véhicule et pilote simultanément le moteur thermique' 1, le coupleur électromagnétique 4, la batterie 5 et la boîte de vitesses 9 en fonction de paramètres fixés par le conducteur, tels que l'enfoncement de la pédale d'accélérateur 14. Ce superviseur principal 13 dialogue en particulier avec un calculateur électronique 18, de type superviseur, qui commande le crabot 10 et les changements de rapport de la boîte de vitesses.

La position de cette pédale traduit une demande de couple à appliquer sur les roues du véhicule pour que sa vitesse de déplacement corresponde à la vitesse demandée par le conducteur.

Le superviseur 13 permet de faire fonctionner la chaîne de traction selon différents modes :
- mode tout électrique,
- mode hybride avec recharge de la batterie, grâce au moteur thermique en marche qui fournit de l'énergie au système,
- mode hybride avec boost électrique quand la batterie fournit l'énergie électrique par l'intermédiaire d'un ou des deux moteurs électriques, donc quand elle se décharge,
- mode tout thermique quand la puissance de la batterie est nulle.

Dans le fonctionnement en mode tout électrique, le moteur thermique 1 est arrêté, sa vitesse de rotation est nulle, donc le rotor R₁ du premier moteur électrique est fixe, et il ne fournit pas de puissance.

Le superviseur 13 ne démarre pas ce moteur thermique si le critère de démarrage prédéterminé issu des informations qu'il reçoit, soit le couple demandé à la roue, la vitesse du véhicule, l'état du moteur électrique et l'état de la batterie - état de charge, tension, intensité, puissance, température - n'est pas satisfait.

Le rotor R₁ du premier moteur électrique étant solidaire de l'arbre 3 du moteur thermique 1, il ne tourne donc pas et ne fournit pas de couple à la roue. Par contre, le rotor R₂ avec son stator fixe S₂ du deuxième moteur électrique fournissent la puissance à la roue via la boîte de vitesses 9.

Lors des phases de freinage du véhicule, le coupleur 4 fonctionne alors en générateur et recharge la batterie 5.

Ce mode tout électrique est réalisé généralement pour de faibles vitesses du véhicule, de telle sorte que le rapport de la boîte de vitesses choisi est le plus court, ce qui évite de changer de rapport quand la vitesse reste inférieure à 80 km/h par exemple.

Dans le fonctionnement en mode hybride avec recharge de la batterie, le moteur thermique 1 est démarré et fournit une puissance supérieure à celle demandée à la roue par le conducteur. Le superviseur 13 décide de ce mode de fonctionnement quand il constate que la batterie doit être rechargée ou que la puissance à la roue est faible. Il va choisir le couple et le régime du moteur thermique de manière à réduire la consommation de carburant et minimiser les émissions de polluants en tenant compte du rendement de la chaîne de traction.

Quatre configurations sont possibles en fonction de la valeur du couple à la roue demandé et de la vitesse du véhicule.

Quand le couple à la roue demandé et la vitesse du véhicule sont faibles, le moteur thermique 1 fournit de la puissance à la roue magnétiquement par l'intermédiaire du coupleur 4 : le rotor R₁ et le stator tournant S₁ du premier moteur électrique servent de générateur, pendant que le rotor R₂ et le stator S₂ fixe constituant le deuxième moteur électrique fonctionnent aussi en générateur, ce qui recharge la batterie 5.

Quand le couple à la roue demandé est élevé et la vitesse du véhicule faible, le moteur thermique 1 fournit magnétiquement de la puissance aux roues par l'intermédiaire du premier moteur électrique au stator tournant S₁ et délivre aussi de la puissance à ce premier moteur électrique fonctionnant alors en générateur. Le deuxième moteur électrique au stator fixe S₂ fournit un couple supplémentaire aux roues pour satisfaire le couple demandé par le conducteur. En fonction de la différence de puissance générée par le premier moteur électrique et débitée par le second moteur, la batterie est soit rechargée, ce qui est le cas le plus fréquent dans cette configuration, soit déchargée.

Quand le couple à la roue est faible et la vitesse du véhicule élevée, le deuxième moteur électrique au stator fixe S₂ fonctionne en générateur. De même, en fonction des puissances générée et fournie, la batterie est soit rechargée soit déchargée. Le moteur thermique 1 fournit une partie de son couple magnétiquement au stator tournant S₁ du premier moteur électrique.

Enfin, quand le véhicule fournit de la puissance au deuxième moteur électrique, en provenance des roues, le superviseur 13 décide d'actionner le freinage récupératif et ce deuxième moteur devient générateur de courant.

Dans le fonctionnement en mode hybride avec boost électrique, la batterie se décharge. Ce mode est provoqué quand la vitesse du véhicule est suffisamment élevée et le couple demandé par le conducteur, à travers la pédale d'accélérateur, est fort.
La puissance du moteur thermique ne suffisant plus, la batterie fournit la puissance complémentaire. Le superviseur choisit encore des points de fonctionnement du moteur thermique, en couple et régime, destinés à minimiser la consommation de carburant et les émissions polluantes. Le stator fixe S₂ du deuxième moteur induit un couple sur le stator tournant S₁ du premier moteur électrique qui s'ajoute au couple fourni par le moteur thermique, via le rotor R₁ du premier moteur. Les deux machines électriques du coupleur 4 sont donc motrices.

Le mode de fonctionnement tout thermique a lieu quand la batterie ne fournit pas de puissance électrique sur commande du superviseur qui détermine des valeurs de couple et de régime du moteur thermique minimisant la consommation de carburant, ce qui dans certains cas fait correspondre la puissance du moteur avec celle des roues. Au rendement près, la puissance du moteur thermique est égale à la puissance nécessaire aux roues. Le superviseur détermine toujours des valeurs de couple et'de régime du moteur thermique minimisant la consommation de carburant.

Pour cela, le superviseur 13 considère la vitesse des roues, l'enfoncement de la pédale d'accélérateur et l'état de la batterie du véhicule pour choisir à la fois le couple et le régime du moteur thermique. Le rapport entre le couple du moteur thermique et le couple à la roue conditionne le fonctionnement du deuxième moteur électrique. De même, le rapport entre le régime du moteur thermique et la vitesse du véhicule conditionne le fonctionnement du premier moteur électrique. Cela conduit à deux configurations possibles.

Premièrement, pour une demande de couple à la roue élevé, supérieur à un seuil non constant dépendant du couple du moteur thermique, le deuxième moteur électrique au stator fixe S₂ joue un rôle moteur en fournissant la puissance aux roues. Pour cela, il est alimenté par la puissance électrique issue du premier moteur électrique au stator tournant S₁ jouant le rôle de coupleur. Le moteur thermique 1 fournit une partie de sa puissance magnétiquement par l'intermédiaire du coupleur.

Deuxièmement, pour une demande de couple à la roue faible, inférieur au seuil précédent, le procédé inverse se produit car le premier moteur électrique est générateur de puissance électrique au stator fixe S₂ du deuxième moteur électrique.

Hormis les différents fonctionnements donnés par les lois de gestion de l'énergie et qui déterminent les commandes en couple du moteur thermique 1, du moteur électrique'au stator tournant S₁ jouant le rôle de coupleur et du moteur électrique au stator fixe S₂, le superviseur réalise d'autres commandes annexes qui doivent être définies, telles que le choix des rapports de la boîte de vitesses, la commande du crabot ou embrayage, le démarrage du moteur thermique et la recharge de la batterie quand le véhicule est à l'arrêt.

Dans le cas d'un train épicycloïdal équipé d'un frein, le fait d'actionner un frein solidaire d'une partie tournante du train permet de changer de rapport, jouant un rôle équivalent à une boîte de vitesses. Dans le cas d'un train épicycloïdal non équipé d'un frein, son fonctionnement dépend des commandes en couple envoyées aux moteurs thermique et électriques par le superviseur.

Concernant les rapports de boîte, le superviseur 13 les choisit en fonction de la vitesse des roues du véhicule et du couple à la roue demandé dans le but de minimiser la consommation de carburant et les émissions de polluants. L'avantage résultant est que d'importantes circulations d'énergie électrique sont évitées ainsi qu'un surdimensionnement des moteurs électriques. Le rapport le plus court est choisi pour des forts couples et des vitesses faibles.

Concernant la commande du crabot 10 par le superviseur, les phases de crabotage sont activées quand il est opportun de ne plus faire varier le régime du premier moteur électrique et de le fixer à la vitesse du véhicule au rapport près. Pour lier le rotor R₁ au stator tournant S₁, le rotor est d'abord synchronisé au stator tournant, auquel il est ensuite solidarisé. Dans ce cas, aucune puissance ne circule entre le rotor et le stator tournant, ce qui supprime des pertes électriques. Le deuxième moteur électrique au stator fixe S₂ fonctionne soit en générateur de couple supplémentaire, soit au contraire en alternateur avec un couple négatif. Ce fonctionnement est strictement identique à celui d'un véhicule hybride parallèle, puisque le moteur thermique transmet directement la puissance aux roues.

A propos du démarrage du moteur thermique alors que le véhicule fonctionne en tout électrique, le superviseur 13 envoie un ordre de démarrage au moteur thermique pour un fonctionnement hybride ou tout thermique. Le stator fixe S₂ propulsant initialement le véhicule par l'intermédiaire du rotor R₂ fournit un couple supplémentaire au rotor R₁ du premier moteur électrique qui permet de lancer le moteur thermique et ainsi de provoquer son démarrage.

Dès que le moteur thermique atteint son régime de consigne, le couple supplémentaire du deuxième moteur électrique est annulé et seul le moteur thermique fournit de la puissance aux roues du véhicule.

Enfin, dans le cas où le véhicule est arrêté, la puissance au niveau des roues étant nulle, alors que la batterie se décharge, en cas d'embouteillage par exemple, le moteur thermique 1 peut être commandé par le superviseur pour recharger la batterie par l'intermédiaire du coupleur, le premier moteur électrique au stator tournant S₁ fonctionnant en alternateur grâce à l'échange d'énergie entre le rotor R₁ et le stator tournant S₁^{.}

Selon une autre caractéristique de l'invention, le groupe motopropulseur ne comprend plus une boîte de vitesses mais un train épicycloïdal équipé d'un ou de deux embrayages actionnés alternativement pour effectuer les deux rapports.

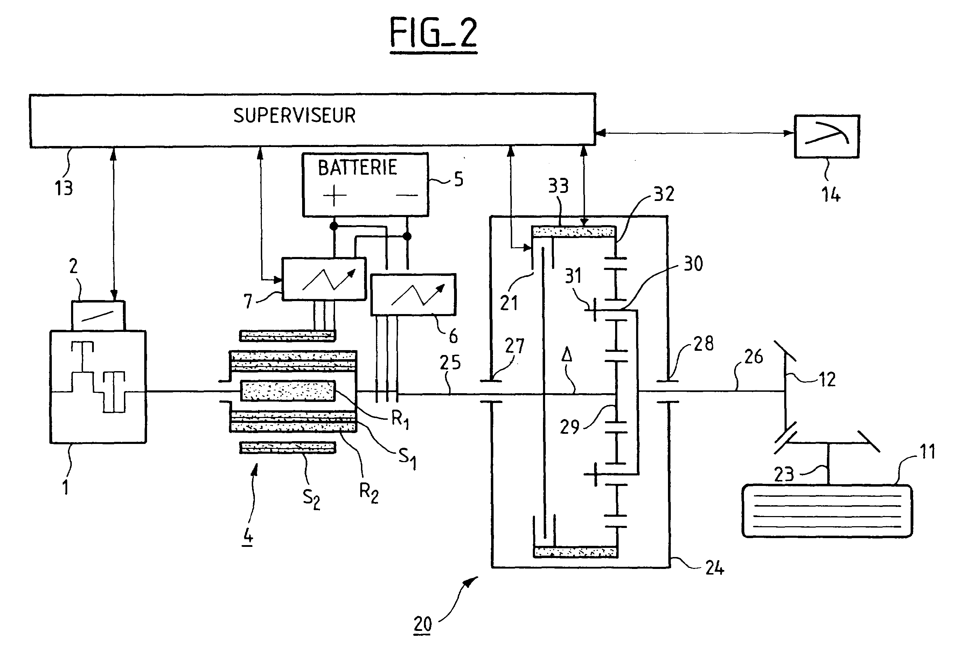

La figure 2 est une coupe schématique d'un groupe motopropulseur avec un train épicycloïdal 20 placé en aval du coupleur 4 et équipé d'un embrayage 21. La transmission est destinée à entraîner en rotation deux arbres de sortie 23 reliés aux roues motrices 11 du véhicule, dont une seule est représentée. Elle est enfermée dans un carter 24 et comporte un train épicycloïdal plan 20. Les deux arbres d'entrée 25 et 26 de la transmission sont coaxiaux et guidés chacun dans un palier 27 et 28 respectivement du carter 24. Le train épicycloïdal est agencé axialement entre ces deux paliers 27 et 28 et se compose d'un engrenage planétaire 29, d'un porte-satellites 30 et de satellites 31, et d'une couronne 32 à denture interne.

Classiquement, le planétaire 29 est agencé coaxialement au centre de la couronne 32, dans un même plan perpendiculaire à leur axe commun Δ, et les satellites 31, montés tournants à l'extrémité de branches radiales du porte-satellite 30, sont interposés radialement entre le planétaire 29 et la couronne 32 de manière à engrener simultanément avec le planétaire et la couronne.

Le planétaire 29 forme un premier composant d'entrée de mouvement de la transmission et est entraîné autour de son axe Δ par le premier axe d'entrée 25. Le porte-satellites 30 forme un deuxième composant de sortie de mouvement de la transmission et est entraîné autour de l'axe Δ par le deuxième arbre d'entrée 26.

Dans le cas de la figure 2, le train épicycloïdal 20 est placé en aval du coupleur électromagnétique 4, dont le stator tournant S₁ est lié en permanence au planétaire 29 et temporairement à la couronne 32. Le train épicycloïdal comporte de plus un frein à bande 33 qui permet de freiner la couronne 32 pour obtenir le rapport court, sur commande du superviseur 13. Pour obtenir un rapport long, le superviseur commande le couplage du planétaire 29 avec la couronne 32 en actionnant l'embrayage 21.

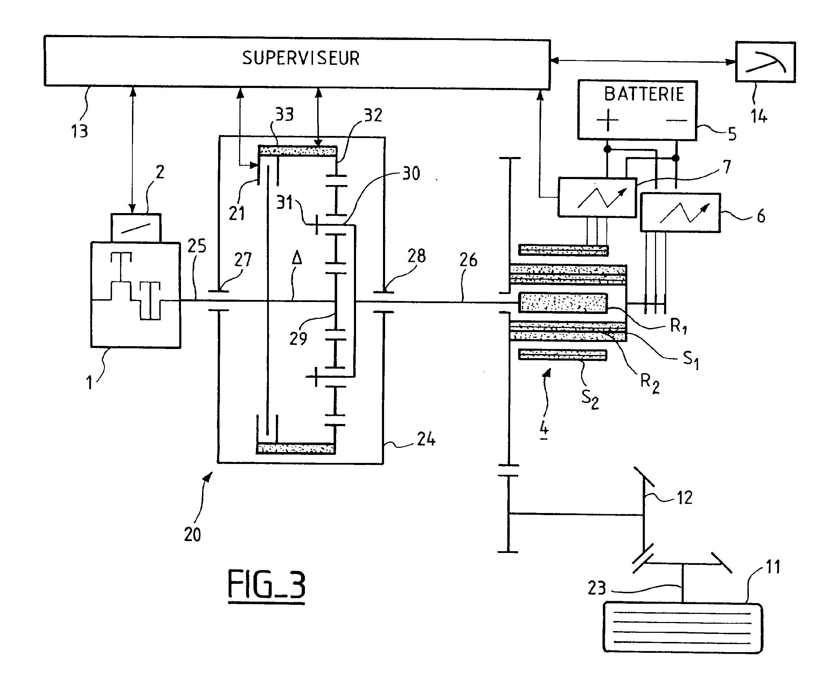

La figure 3 est une coupe schématique d'un groupe motopropulseur avec un train épicycloïdal placé en amont du coupleur électromagnétique constitué par les deux moteurs électriques selon l'invention, le porte-satellites 30 étant lié en permanence au rotor R₁ du premier moteur électrique et le planétaire 20 étant relié à l'arbre 3 du moteur thermique 1. Le train 20 comporte un frein à bande 33 et un embrayage 21 comme dans le cas de la figure 2. Pendant les changements de rapports, la commande en couple du coupleur 4 et la commande du moteur électrique au stator fixe S₂ ne changent pas.

Le moteur thermique fournit toujours le même couple. Progressivement, le frein à bande 33 équipant la couronne 32 est désactivé pendant que l'embrayage 21 est activé, afin de changer la vitesse du rotor R₁ du premier moteur électrique sans changer la vitesse du véhicule ni celle du moteur thermique.

Ainsi, la vitesse relative entre le stator tournant Si et le rotor R₁ est atténuée, ce qui évite que d'importants flux de puissance transitent par le coupleur. Cette architecture présente l'avantage d'offrir au conducteur du véhicule l'agrément d'une transmission continue, sans ressentir de trous de couple pendant les changements de rapports.

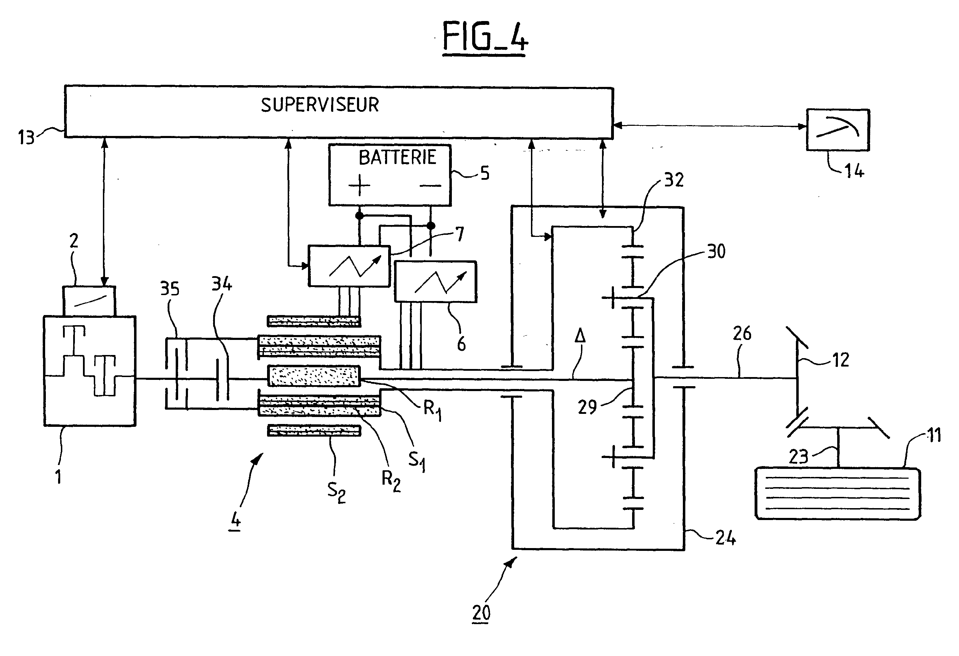

L'architecture du groupe motopropulseur, représenté en coupe schématique sur la figure 4, comprend un train épicycloïdal 20 en aval du coupleur électromagnétique 4 et deux embrayages 34 et 35, actionnés alternativement par le superviseur 13, pour effectuer les deux rapports en fonction de la puissance à la roue demandée. Le premier embrayage 34 est destiné à relier le moteur thermique 1 au rotor R₁ du premier moteur électrique à stator tournant, rotor qui est solidaire du planétaire 29 du train épicycloïdal, et le deuxième embrayage 35 est destiné à relier le moteur thermique au stator tournant S₁ qui est solidaire de la couronne 32. Ainsi, lorsque le premier embrayage 34 est embrayé et le deuxième embrayage 35 est débrayé, le moteur thermique est couplé au rotor R₁ du coupleur pour les forts couples à la roue, et lorsque le premier embrayage 34 est débrayé et le deuxième embrayage 35 est embrayé, le moteur thermique est alors couplé au stator tournant S₁ pour les faibles couples.

De plus, lorsque ces deux embrayages 34 et 35 sont embrayés, le moteur thermique est en prise directe avec les roues 11, évitant ainsi certaines pertes à vide du coupleur pour de grandes et moyennes vitesses stabilisées.

Ce type d'architecture a pour avantage de diminuer les flux de puissance transitant magnétiquement et électriquement par le coupleur 4.

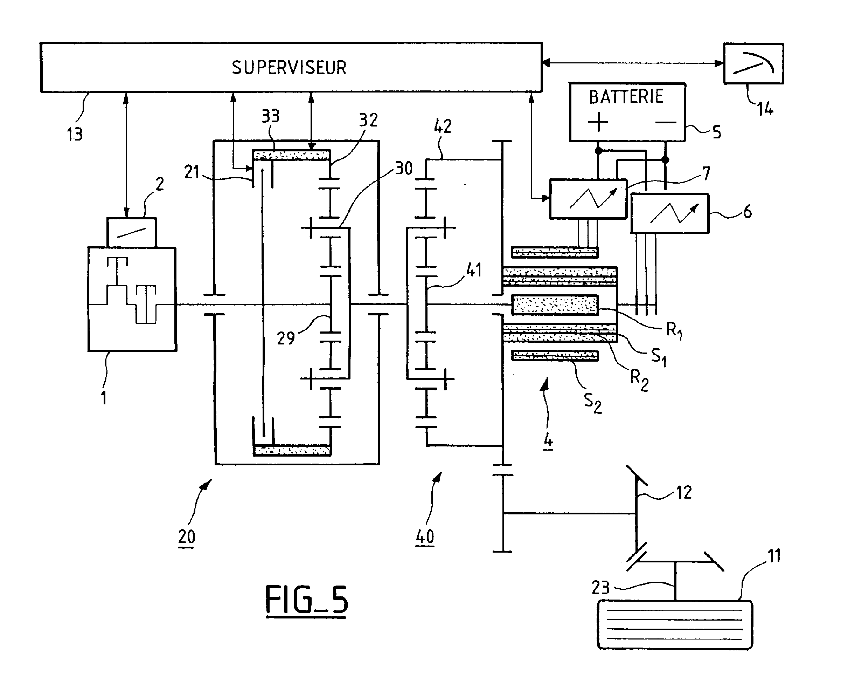

Selon une autre caractéristique de l'invention, le groupe motopropulseur comprend deux trains épicycloïdaux réalisant la transmission d'un véhicule hybride du type double différentiel. Dans le cas de la figure 5, les deux trains 20 et 40 sont placés en amont du coupleur électromagnétique 4, le premier train 20 qui est équipé d'un frein à bande 33 et d'un embrayage 21, étant disposé de telle sorte que son planétaire 29 est lié en permanence au moteur thermique 1 et temporairement à la couronne 32. Le planétaire 41 du deuxième train 40 est lié en permanence au rotor R₁ du premier moteur électrique alors que sa couronne 42 est solidaire du stator tournant S₁.

Le premier train épicycloïdal 20 est utilisé de manière binaire, comme une boîte de vitesses à deux rapports par le superviseur 13 qui commande alternativement le frein à bande 33 et l'embrayage 21, comme cela est décrit pour la figure 2.

Le deuxième train épicycloïdal 40 est utilisé de manière continue afin de garder les deux degrés de liberté sur le moteur thermique 1.

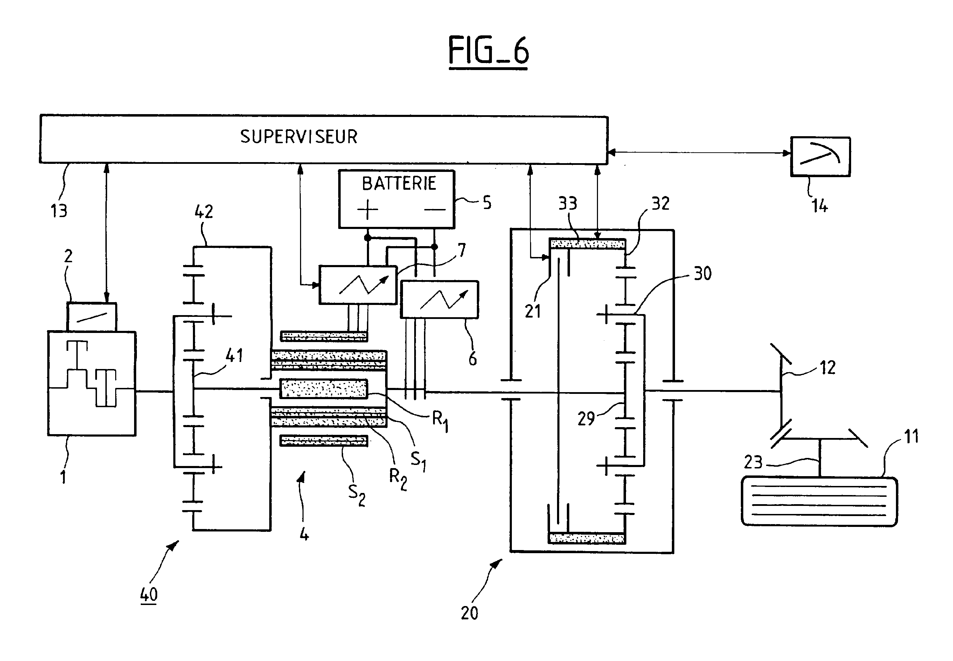

Dans le cas de la figure 6, le premier train épicycloïdal 20 équipé d'un frein à bande 33 et d'un embrayage 21 est placé en aval du coupleur électromagnétique 4, dont le stator tournant S₁ est lié en permanence au planétaire 29 du train et temporairement à sa couronne 32, dans le but d'éviter les trous de couple. Le deuxième train 40 est placé en amont du coupleur, de telle sorte que son planétaire 41 est lié en permanence au rotor R₁ du premier moteur électrique et sa couronne 42 au stator tournant S₁, dans le but de réduire les dimensions du coupleur.

Le groupe motopropulseur selon l'invention, réalisé selon les différentes architectures décrites précédemment, résout aussi bien le problème du dimensionnement des machines électriques que celui des pertes électriques à vitesse nulle du coupleur. En effet, du point de vue du dimensionnement, l'ajout d'une boîte de vitesses avec un rapport de seconde et un rapport de quatrième permet de réduire les dimensions des machines électriques d'un facteur 2. Une boîte de vitesses à trois rapports permet de réduire le dimensionnement d'un facteur trois. Du point de vue des pertes à vitesse nulle du coupleur, elles sont annulées par l'adjonction d'une prise directe mécanique.

L'intérêt du coupleur réside dans le fait que les fonctions des moteurs électriques rencontrées classiquement dans un véhicule équipé d'une transmission à train épicycloïdal sont réalisés par une seule machine qui est un coupleur électromagnétique.

## Revendications

1. Groupe motopropulseur pour véhicule à transmission électrique hybride, comprenant un moteur thermique, deux moteurs électriques, des moyens de changement de la vitesse du moteur thermique sans changer la vitesse de déplacement du véhicule et un calculateur électronique de commande, de type superviseur, des moteurs thermique et électriques en fonction de l'enfoncement de la pédale d'accélérateur par le conducteur, caractérisé en ce que les deux moteurs électriques forment un coupleur électromagnétique constitué de telle manière que le rotor (R₁) du premier moteur électrique est lié à l'arbre de rotation (3) du moteur thermique (1) pendant que son stator (S₁) est libre en rotation, le rotor (R₁) et le stator tournant (S₁) de ce premier moteur électrique ayant le même axe de symétrie parallèle ou confondu avec l'arbre (3) du moteur thermique et porte le rotor (R₂) du deuxième moteur électrique dont le stator (S₂) concentrique est fixe par rapport au véhicule et solidaire du carter moteur, de telle sorte que le couple du rotor (R₁) du premier moteur électrique est transmis magnétiquement à son stator tournant (S₁) et le couple du stator fixe (S₂) du deuxième moteur électrique est transmis au stator tournant (S₁), et en ce qu'une prise directe est réalisée pour bloquer en rotation le stator tournant du premier moteur électrique par rapport à son rotor duquel il devient solidaire dans le but de transmettre un couple mécanique à la roue sans perte électrique.

2. Groupe motopropulseur selon la revendication 1, caractérisé en ce que les moyens de changement de la vitesse du moteur thermique sont constitués par une boîte de vitesses (9) à au moins deux rapports au bout de laquelle est réalisée une prise directe avec un crabot (10) destiné à bloquer en rotation le stator tournant (S₁) du premier moteur électrique par rapport à son rotor (R₁).

3. Groupe motopropulseur selon la revendication 1, caractérisé en ce que les moyens de changement de la vitesse du moteur thermique sont constitués par un train épicycloïdal (20) placé en aval du coupleur électromagnétique (4) dont le stator tournant (S₁) est lié en permanence au planétaire (29) et temporairement à la couronne (32) du train, ledit train (20) étant équipé d'un frein à bande (33) destiné à freiner la couronne (32) pour obtenir un rapport court sur commande du superviseur (13) et d'un embrayage (21) destiné à coupler le planétaire (29) avec la couronne (32) également sur commande du superviseur.

4. Groupe motopropulseur selon la revendication 1, caractérisé en ce que les moyens de changement de la vitesse du moteur thermique sont constitués par un train épicycloïdal (20) placé en amont du coupleur électromagnétique (4), le porte-satellites (30) étant lié en permanence au rotor (R₁) du premier moteur électrique et le planétaire (29) étant relié à l'arbre (3) du moteur thermique (1), et en ce que ledit train est équipé d'un frein à bande (33) destiné à freiner la couronne (32) et d'un embrayage (21) destiné à coupler le planétaire (29) avec la couronne (32), le superviseur (13) désactivant le frein à bande (33) pendant qu'il active l'embrayage (21) pour changer la vitesse du rotor (R₁) du premier moteur électrique sans changer la vitesse du moteur thermique (1) et celle du véhicule.

5. Groupe motopropulseur selon la revendication 1, caractérisé en ce que les moyens de changement de la vitesse du moteur thermique sont constitués par un train épicycloïdal (20) en aval du coupleur électromagnétique (4) équipé d'un premier embrayage (34) reliant le moteur thermique (1) au rotor (R₁) du premier moteur électrique à stator tournant, ledit rotor (R₁) étant solidaire du planétaire (29) du train épicycloïdal, et équipé d'un second embrayage (35) reliant le moteur thermique au stator tournant (S₁) qui est solidaire de la couronne (32), et en ce que le superviseur (13) commande d'une part l'embrayage du premier embrayage (34) et le débrayage simultané du deuxième embrayage (35) pour coupler le moteur thermique au rotor (R₁) du coupleur en cas de forts couples à la roue, et d'autre part le débrayage du premier embrayage (34) et l'embrayage simultané du deuxième embrayage (35) pour coupler le moteur thermique au stator tournant (S₁) du coupleur en cas de faibles couples.

6. Groupe motopropulseur selon la revendication 1, caractérisé en ce que les moyens de changement de la vitesse du moteur thermique sont constitués par deux trains épicycloïdaux placés en amont du coupleur électromagnétique (4), un premier train (20) équipé d'un frein à bande (33) destiné à freiner la couronne (32) pour obtenir un rapport court sur commande du superviseur (13) et d'un embrayage (21) destiné à coupler le planétaire (29) avec la couronne (32) sur commande du superviseur, le planétaire (29) dudit premier train étant lié en permanence au moteur thermique (1) et temporairement à la couronne (32), et un deuxième train (40) dont le planétaire (41) est lié en permanence au rotor (R₁) du coupleur et dont la couronne (42) est solidaire du stator tournant (S₁).

7. Procédé de commande d'un groupe motopropulseur selon l'une des revendications 1 à 6, caractérisé en ce que le superviseur (13) commande le fonctionnement en mode tout électrique pour des vitesses du véhicule inférieures à un seuil préétabli, en bloquant le démarrage du moteur thermique (1) et en alimentant le deuxième moteur électrique dont le rotor (R₂) et le stator fixe (S₂) fournissent seuls du couple aux roues en phase d'accélération, alors qu'en phase de freinage, ils fournissent de la puissance de recharge à la batterie (5).

8. Procédé de commande selon l'une des revendications 1 à 6, caractérisé en ce que le superviseur (13) commande le fonctionnement en mode hybride avec recharge de la batterie quand le moteur thermique (1) fournit une puissance supérieure à la puissance demandée à la roue par le conducteur ou quand la batterie doit être rechargée, en déterminant le couple et le régime du moteur thermique pour réduire la consommation de carburant et les émissions de polluants.

9. Procédé de commande selon la revendication 8, caractérisé en ce que, dans le cas où le couple à la roue demandé et la vitesse du véhicule sont faibles, le superviseur (13) commande le moteur thermique (1) qui fournit de la puissance à la roue magnétiquement par le coupleur (4) dont le rotor (R₁) et le stator tournant (S₁) du premier moteur électrique servent de générateur, pendant que le rotor (R₂) et le stator fixe (S₂) du deuxième moteur électrique fonctionnent aussi en générateur, ce qui recharge la batterie (5).

10. Procédé de commande selon la revendication 8, caractérisé en ce que, dans le cas où le couple à la roue demandé est élevé et la vitesse du véhicule faible, le superviseur (13) commande le moteur thermique (1) qui fournit magnétiquement de la puissance aux roues par l'intermédiaire du premier moteur électrique au stator tournant (S₁) et délivre aussi de la puissance à ce premier moteur électrique fonctionnant en générateur, et le deuxième moteur électrique au stator fixe (S₂) qui fournit un couple supplémentaire aux roues pour satisfaire la demande du conducteur, et en ce que la batterie est rechargée ou déchargée en fonction de la puissance générée par le premier moteur électrique et débitée par le second.

11. Procédé de commande selon la revendication 8, caractérisé en ce que, dans le cas où le couple à la roue est faible et la vitesse du véhicule élevée, le superviseur (13) commande le deuxième moteur électrique au stator fixe (S₂) qui fonctionne en générateur et le moteur thermique (1) qui fournit une partie de son couple aux roues magnétiquement au stator tournant (S₁) du premier moteur électrique du coupleur (4), la recharge de la batterie (5) dépendant des puissances électriques générée et fournie.

12. Procédé de commande selon la revendication 8, caractérisé en ce que, en phase de décélération, quand le véhicule fournit de la puissance au deuxième moteur électrique du coupleur (4) en provenance des roues, le superviseur (13) actionne le freinage récupératif pour que ledit deuxième moteur soit générateur de courant pour la batterie.

13. Procédé de commande selon l'une des revendications 1 à 6, caractérisé en ce que, dans le cas où la puissance du moteur thermique (1) ne satisfait pas la demande de couple par le conducteur et la vitesse élevée du véhicule, le superviseur (13) commande le mode hybride avec boost électrique avec décharge de la batterie (5) qui fournit de la puissance au coupleur (4) dont le stator fixe (S₂) du deuxième moteur électrique induit un couple sur le stator tournant (S₁) du premier moteur, qui s'ajoute au couple fourni par le moteur thermique (1), via le rotor (R₁).

14. Procédé de commande selon l'une des revendications 1 à 6, caractérisé en ce que le superviseur (13) commande le mode tout thermique quand la batterie (5) ne fournit pas de puissance électrique, en déterminant les valeurs du couple et du régime du moteur thermique, minimisant la consommation de carburant, en fonction de la demande de couple à la roue :
- pour une demande supérieure à un seuil prédéterminé variable en fonction du couple du moteur, le premier moteur électrique au stator tournant (S₁) alimente électriquement le deuxième moteur électrique au stator fixe (S₂) qui fournit de la puissance aux roues ;
- pour une demande de couple inférieure audit seuil, le premier moteur électrique est générateur de puissance électrique au stator fixe (S₂) du deuxième moteur électrique qui recharge la batterie (5).

15. Procédé de commande selon la revendication 2, le superviseur (13) commande le crabot (10) pour lier le rotor (R₁) au stator tournant (S₁) du premier moteur électrique quand le régime de celui-ci doit rester égal à la vitesse du véhicule, en synchronisant le rotor (R₁) au stator (S₁) puis en les solidarisant, de telle sorte que le deuxième moteur électrique au stator fixe (S₂) fonctionne soit en générateur de couple supplémentaire, soit en alternateur avec un couple négatif.
